# EUROPÄISCHE PATENTSCHRIFT

(11) **EP 3 521 858 B1**
(45) Veröffentlichungstag und Bekanntmachung des Hinweises auf die Patenterteilung: **13.01.2021**
(21) Anmeldenummer: 19152610.2
(22) Anmeldetag: 18.01.2019
(51) Int. Cl.: G01S 17/42, G01V 8/26, G01S 7/481, G01S 17/93, G01S 17/931, G01V 8/18

(54) **OPTOELEKTRONISCHER SENSOR UND VERFAHREN ZUR ERFASSUNG VON OBJEKTEN IN EINEM ÜBERWACHUNGSBEREICH**
OPTOELECTRONIC SENSOR AND METHOD FOR DETECTING OBJECTS IN A SURVEILLANCE AREA
CAPTEUR OPTOÉLECTRONIQUE ET PROCÉDÉ DE DÉTECTION D'OBJETS DANS UNE ZONE DE SURVEILLANCE

(30) Priorität: 06.02.2018 DE 102018102601
(43) Veröffentlichungstag der Anmeldung: 07.08.2019
(73) Patentinhaber: SICK AG, 79183 Waldkirch (DE)
(72) Erfinder: Steinkogler, Dr. Sascha, 79106 Freiburg (DE); Gehring, Roland, 79215 Elzach-Prechtal (DE); Winterer, Konrad, 79312 Emmendingen (DE)

(56) Entgegenhaltungen:
- EP-A1- 1 503 221
- EP-A1- 3 032 275
- EP-A1- 3 518 000
- WO-A1-98/16801
- WO-A1-2012/089420
- WO-A1-2016/122861
- DE-U1-202013 104 715
- US-A1- 2014 071 234
- US-A1- 2015 260 843

## Beschreibung

Die Erfindung betrifft einen optoelektronischen Sensor und ein Verfahren zur Erfassung von Objekten in einem Überwachungsbereich nach dem Oberbegriff von Anspruch 1 beziehungsweise 9.

Autonom fahrende Fahrzeugen für industrielle Anwendungen (AGV, Automated Guided Vehicles) benötigen eine kompakte dreidimensionale Umfelderfassung zur räumlichen Orientierung und für eine gezielte Fahrt. Zu diesem Zweck werden abtastende Sensorsysteme entwickelt, die schnell und mit großem Blickwinkel räumliche Informationen liefern. Neben bildgebenden Systemen werden oftmals Laserscanner eingesetzt.

Laserscanner haben den Vorteil, in einem Umfeld bis zu 360° um ihre Drehachse die 3D-Umfelddaten direkt und mit hoher Abtastrate zu liefern. Dabei sind weder rechnerleistungsintensive Bildverarbeitungsalgorithmen noch eine großflächige Beleuchtung des Umfeldes notwendig. Außerdem sind die auszuwertenden Datenmengen und -dichten auf ein Minimum reduziert, was eine schnelle elektronische Verarbeitung gestattet.

In einem Laserscanner überstreicht ein von einem Laser erzeugter Lichtstrahl mit Hilfe einer beweglichen, meist rotierenden Ablenkeinheit periodisch den Überwachungsbereich. Der im Überwachungsbereich von Objekten zurückgeworfene Lichtstrahl wird wieder empfangen, um dann das Empfangssignal elektronisch auszuwerten. Die Lichtlaufzeit wird mit einem Phasen- oder Pulsverfahren gemessen, um den Abstand eines angetasteten Objekts zu bestimmen. Zusätzlich wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

In den meisten Laserscannern wird die Abtastbewegung durch einen Drehspiegel erreicht. Es ist aber auch bekannt, stattdessen den gesamten Messkopf mit Lichtsender und Lichtempfängern rotieren zu lassen, wie dies beispielsweise in DE 197 57 849 B4 oder EP 2 933 655 A1 beschrieben ist.

Wird der Abtaststrahl zusätzlich bezüglich der zentralen Abtastebene senkrecht zur Drehachse variiert, also im Elevationswinkel, so entstehen dreidimensionale Messdaten. Dafür wiederum gibt es zum einen die Möglichkeit eines dynamischen Verkippens, wie etwa aus DE 10 2014 100 245 B3 bekannt. Das erfordert jedoch einen entsprechenden Kippmechanismus und reduziert die effektive Abtastrate erheblich.

Eine zweite Möglichkeit ist ein mehrstrahliger Laserscanner, der in jeder Periode mehrere Abtastebenen erfasst. Die Anzahl und die Richtungen der Abtaststrahlen in Elevation bestimmen den Blickwinkel und die räumliche Auflösung. Je nach Anwendung kann hier ein ganz unterschiedlicher Bedarf bestehen. Um die Gerätekosten gering zu halten, sollten nur so viele Abtaststrahlen eingesetzt werden wie notwendig, ohne für die konkrete Anwendung wesentliche Umfelddaten zu verlieren. Diese Abtaststrahlen müssen dafür passend ausgerichtet sein.

Manche herkömmliche Mehrstrahl-Laserscanner verwenden eine monolithische Zeile von Lichtsendern beziehungsweise Lichtempfängern. Dann sind aber die Abtastebenen auf einen bestimmten, äquidistanten Abstand festgelegt und liegen dicht an dicht, weil der Platz auf dem Halbleitermaterial der Sende- und Empfangselemente optimal genutzt werden soll. Somit besteht allenfalls noch die Möglichkeit, Daten aus in einer bestimmten Anwendung nicht gebrauchten Abtastebenen zu verwerfen, aber das ist keine optimierte Anpassung des Geräts, sondern nutzt im Gegenteil dessen Leistungsfähigkeit nur teilweise aus.

Die DE 10 2004 014 041 A1 befasst sich mit einem Sensorsystem zur Hinderniserkennung nach Art eines Laserscanners, das eine Laserzeile und eine Reihe von Fotodioden verwendet. Derartige Reihenanordnungen haben die soeben genannten Nachteile, dass sie äquidistante, dichte Abstände der Abtastebenen festlegen. In einer Ausführungsform der DE 10 2004 014 041 A1 sind drei solche Abtastsysteme mit jeweils einer Laserzeile um 120° in Drehrichtung gegeneinander versetzt angeordnet, deren Elevationswinkel durch einen Hubmotor variiert werden kann. Damit werden die von jeweiligen Abtastsystemen erfassten Sichtbereiche so eingestellt, dass sie gemeinsam einen möglichst großen, zusammenhängenden Elevationswinkelbereich abdecken. Die Abtastsysteme sind durch den Hubmotor sehr aufwändig, und ein solcher Laserscanner ist nicht kostengünstig. Trotz des Aufwands bleibt die Flexibilität zur optimalen Anpassung von Abtaststrahlen an eine Anwendung vergleichsweise klein.

In der EP 2 863 176 A2 wird eine rotierende Plattform offenbart, auf der verschiedene Erfassungsmodule rotieren können. In einer Ausführungsform werden für eine zweikanalige, redundante Messwerterfassung zwei Abtaststrahlen senkrecht zur Drehachse und in Drehrichtung um 180° versetzt erzeugt. Auf diese Weise werden keine 3D-Messdaten erfasst. In einer anderen Ausführungsform werden mehrere abstandsmessende Erfassungsmodule ungefähr in Richtung der Drehachse ausgerichtet und dabei gegeneinander verkippt. Wie das konstruktiv möglich ist, wird nicht erläutert, und auch eine flexible Anpassung an eine andere Anwendung ist nicht beschrieben.

Die US 8 767 190 B2 und ähnlich auch die US2017/0219695 A1 sehen für jede Abtastebene einen eigenen Lichtsender und Lichtempfänger auf einer Leiterplatte vor. Die Leiterplatten werden mit jeweils kleinem Kippwinkel übereinander auf der Drehachse gestapelt, und damit wird dann eine Vielzahl von Abtastebenen mit gleichem gegenseitigem Winkelabstand erfasst. Der Aufwand für die Bauteile und deren Justage ist hoch. Dieser herkömmliche Ansatz beruht darauf, hohe Anforderungen mit hohen Kosten zu erfüllen. Es werden so viele Messdaten erfasst, dass für die meisten Anwendungen die wesentlichen Messdaten mit umfasst sind. Viele industrielle Anwendungen benötigen aber diesen Aufwand und diese Fülle an Messdaten gar nicht, sondern nur eine Auswahl davon. Die Abtastebenen sind aber festgelegt, und damit ist eine schon hardwareseitige, kostensparende Anpassung an eine spezielle Anwendung nicht möglich.

Die nachveröffentlichte EP 3 518 000 A1 offenbart einen Laserscanner mit mehreren Abtastmodulen, die bezüglich der Hauptblickrichtung verkippt und/oder um einen Drehwinkel verdreht angeordnet sind. In einer Ausführungsform wird vorgeschlagen, mindestens zwei Abtastmodule auf einer gemeinsamen Leiterkarte unterzubringen, die als Flexplatine ausgebildet sein kann.

DE202013104715U offenbart einen Laserscanner mit zueinander verkippten Erfassungseinheiten.

Daher ist Aufgabe der Erfindung, einen flexibleren Sensor mit mehreren Abtastebenen zu schaffen.

Diese Aufgabe wird durch einen optoelektronischen Sensor und ein Verfahren zur Erfassung von Objekten in einem Überwachungsbereich nach Anspruch 1 beziehungsweise 9 gelöst. In einer Abtasteinheit, die um eine Drehachse rotiert oder zumindest hin- und herschwenkt und so einen periodisch bewegten Messkopf bildet, sind mehrere Abtastmodule untergebracht. Die Abtastmodule erzeugen jeweils einen Abtaststrahl und erfassen dadurch im Verlauf der periodischen Bewegung eine Abtastebene. Dafür umfassen die Abtastmodule jeweils einen Lichtsender und einen Lichtempfänger. Eine Steuer- und Auswertungseinheit gewinnt aus den Empfangssignalen der Abtastmodule Informationen über die Objekte an den jeweils angetasteten Punkten.

Die Erfindung geht von dem Grundgedanken aus, dass der Elevationswinkel des Abtaststrahls eines jeweiligen Abtastmoduls und damit die Blickrichtung und der Winkelabstand der von dem Sensor erfassten Abtastebenen zu einer Anwendung passend eingestellt sind. Der Elevationswinkel wird gegen eine zentrale Abtastebene senkrecht zur Drehachse gemessen. Um den Elevationswinkel passend einzustellen, sind die Abtastmodule geneigt auf Abschnitten einer Grundplatte angeordnet. Dazu sind die Abschnitte beweglich und insbesondere verbiegbar, um sie aus der Ebene der Grundplatte heraus zu neigen oder zu verkippen.

Die Erfindung hat den Vorteil, dass es ganz wesentlich vereinfacht wird, einen Sensor und insbesondere Laserscanner herzustellen, dessen Anzahl und Anordnung von Abtaststrahlen beziehungsweise Abtastebenen anwendungsspezifisch angepasst ist. Das führt nicht nur zu einem schlankeren Sensor, sondern auch zu weniger Daten, weil genau die anwendungsrelevanten Messdaten erfasst werden. Der modulare Aufbau verringert die Komplexität von Sensor und Produktionsprozess. Die Anpassungen sind in diesem modularen Konzept angelegt und bedürfen keiner größeren Überarbeitung des Aufbaus oder gar einer Neuentwicklung des Sensors. Zusammen mit geringen Herstellkosten und einer kompakten Bauform ist der Sensor besonders geeignet für autonome Fahrzeuge.

Die Abtastmodule sind bevorzugt untereinander identisch aufgebaut. Dadurch entsteht eine gemeinsame Vorbaugruppe, die nur einmal spezifiziert und validiert werden muss. Durch entsprechend erhöhte Stückzahlen sinken die Herstellkosten weiter. Da in neuen Endgerätevarianten eine Hauptkomponente in Form des Abtastmoduls unverändert bleibt, wird die Produktentwicklung und Variantenbildung deutlich vereinfacht.

Die Abtastmodule sind bevorzugt in Umfangrichtung um die Drehachse versetzt zueinander angeordnet. Sie bilden demnach einen Ring oder Kreis um die Drehachse und finden so einfach Platz auf der Grundplatte. Der Ring muss nicht vollständig und auch ein verwendeter Abschnitt des Rings nicht gleichmäßig mit Abtastmodulen besetzt sein. Bei üblichen hohen Drehzahlen eines Laserscanners spielt der Winkelversatz in Drehrichtung keine Rolle, weil die Szenerie in den kurzen Zwischenzeiten für die Bewegung von einem Abtastmodul zum nächsten als praktisch statisch angesehen werden kann.

Die Grundplatte der Abtasteinheit ist eine rotierende Leiterplatte. Diese Leiterplatte rotiert insbesondere gegenüber einer weiteren, in einer Sockeleinheit ruhenden Leiterplatte. Die beiden Leiterplatten können durch entsprechende Spulen und Magnetstrukturen als Motor für die Bewegung der Abtasteinheit um die Drehachse fungieren. Zudem ist auch möglich, eine Versorgung der Abtasteinheit beziehungsweise eine Datenkommunikation zwischen beweglicher Abtasteinheit und ruhender Sockeleinheit in die Leiterplatten zu integrieren, wie dies insbesondere in der einleitend schon genannten EP 2 933 655 A1 beschrieben ist. Das führt zu einem besonders kompakten Aufbau.

Die Abtastmodule sind bevorzugt auf der rotierenden Leiterplatte ringförmig bestückt. Dadurch sind sie auf einfache Weise zugleich elektronisch angeschlossen und in der richtigen Position auf einem insbesondere zur Drehachse zentrierten Kreis mit gegenseitigem Winkelversatz in Drehrichtung angeordnet.

Die rotierende Leiterplatte weist die in ihrer Neigung veränderlichen Abschnitte auf. Die geneigten Abschnitte für die Abtastmodule sind also Leiterplattenlaschen, die entsprechend der Neigung verbogen werden.

Oberhalb der Leiterplatte ist bevorzugt ein ringförmiger Teilerkranz mit Winkelsegmentteilern angeordnet, welche die Lichtstrahlen der Abtastmodule voneinander trennen. Der Teilerkranz sorgt alternativ zu einem entsprechenden Spiegelkranz für eine optische Trennung zwischen den Abtastmodulen.

Der Teilerkranz ist bevorzugt so geformt, dass dadurch die veränderlichen Abschnitte mit einer durch die Formgebung festgelegten Neigung fixiert sind. Der Teilerkranz erfüllt hier neben der optischen Abtrennung noch eine zweite Funktion. Durch geeignete Formgebung wird dafür gesorgt, dass die veränderlichen Abschnitte, auf denen sich die Abtastmodule befinden, in die passende Neigung gebracht beziehungsweise in der passenden Neigung fixiert werden. Um verschiedene Varianten von Sensoren mit unterschiedlichen Abtastebenen zu bilden, muss dann lediglich noch der passende Teilerkranz hergestellt und verbaut werden.

Der Sensor weist bevorzugt zwei bis zehn Abtastmodule auf. Es gibt keine harte Grenze, die gegen mehr Abtastmodule spricht, aber bei mehr als zehn Abtastebenen wird der Gesamtaufbau doch recht komplex. Ein Sensor mit beispielsweise zwölf Abtastebenen ist aber durchaus noch vorstellbar.

Für die Abtastmodule sind vorzugsweise Elevationswinkel zwischen -30° und +30° einstellbar. Damit wird grob die Umgebung der zentralen Abtastebene senkrecht zur Drehachse erfasst. Diese Umgebung ist in vielen Anwendungen besonders interessant, gerade auch bei autonomen Fahrzeugen. Es ist häufig sinnvoll, einen der Elevationswinkel auf 0° festzulegen und damit unter anderem die zentrale Abtastebene zu erfassen.

Die Elevationswinkel sind bevorzugt fest eingestellt, also statisch, nochmals bevorzugt schon im Produktionsprozess. Der Sensor wird so an eine bestimmte Anwendung angepasst beziehungsweise dafür hergestellt. Die modulare Plattform mit den Einstellmöglichkeiten über Spiegelelemente oder veränderliche Abschnitte einer Grundplatte ermöglicht, eine Vielzahl von Varianten aus demselben Grundgerät abzuleiten. Einen Verstellmechanismus, durch welchen der Elevationswinkel auch noch nach der Montage oder gar im Betrieb variiert werden kann, gibt es vorzugsweise nicht, um den Sensor einfach zu halten.

Die Abtastmodule weisen bevorzugt jeweils genau einen Lichtsender und Lichtempfänger auf. Somit ist jedes Abtastmodul für genau einen Abtaststrahl zuständig. Das ermöglicht eine individuelle Einstellung des Elevationswinkels jeder Abtastebene. Außerdem sind die Abtastmodule für sich einfach aufgebaut. Alternativ weist schon das einzelne Abtastmodul mehrere Abtaststrahlen auf. Dann ist die Konfiguration nicht mehr so frei, weil der Winkelabstand der Abtaststrahlen innerhalb der Abtastmodule festliegt. Dafür genügt eine geringere Gesamtzahl von Abtastmodulen.

Die Steuer- und Auswertungseinheit ist bevorzugt dafür ausgebildet, aus einer Lichtlaufzeit zwischen Aussenden der Lichtstrahlen und Empfangen der remittierten Lichtstrahlen einen Abstand des Objekts zu bestimmen. Der Sensor wird dadurch entfernungsmessend. Alternativ wird lediglich die Anwesenheit eines Objekts festgestellt und beispielsweise als Schaltsignal ausgegeben. Die Steuer- und Auswertungseinheit kann je nach Ausführungsform an verschiedenen Stellen im Sensor angeordnet und auch auf mehrere Bausteine verteilt implementiert sein. Mögliche Anordnungen der Steuer- und Auswertungseinheit oder von Teilen davon sind ein Abtastmodul, die Abtasteinheit oder die Sockeleinheit, gegenüber der die Abtasteinheit sich um die Drehachse bewegt

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Beispielen, die nicht unter die Ansprüche fallen, und Ausführungsformen und unter Bezug auf die beigefügte Zeichnung näher erläutert. Die Abbildungen der Zeichnung zeigen in:
- Fig. 1a-b: beispielhafte Konfigurationen von Abtastebenen eines Laserscanners;
- Fig. 2: eine Schnittdarstellung eines Abtastmoduls mit Spiegelelementen;
- Fig. 3: eine Draufsicht auf eine Grundplatte einer Abtasteinheit eines Laserscanners mit darauf in Drehrichtung versetzt angeordneten Abtastmodulen;
- Fig. 4: eine Schnittdarstellung eines als Laserscanner ausgebildeten optischen Sensors mit Abtastmodulen gemäß Figur 2;
- Fig. 5: eine schematische Explosionsdarstellung der Unterbaugruppen eines Laserscanners mit Abtastmodulen gemäß Figur 4;
- Fig. 6: eine Schnittdarstellung eines Abtastmoduls auf einem geneigten Abschnitt der Grundplatte;
- Fig. 7: eine Schnittdarstellung einer Ausführungsform eines Laserscanners mit Abtastmodulen gemäß Figur 6; und
- Fig. 8: eine schematische Explosionsdarstellung der Unterbaugruppen eines Laserscanners mit Abtastmodulen gemäß Figur 7.

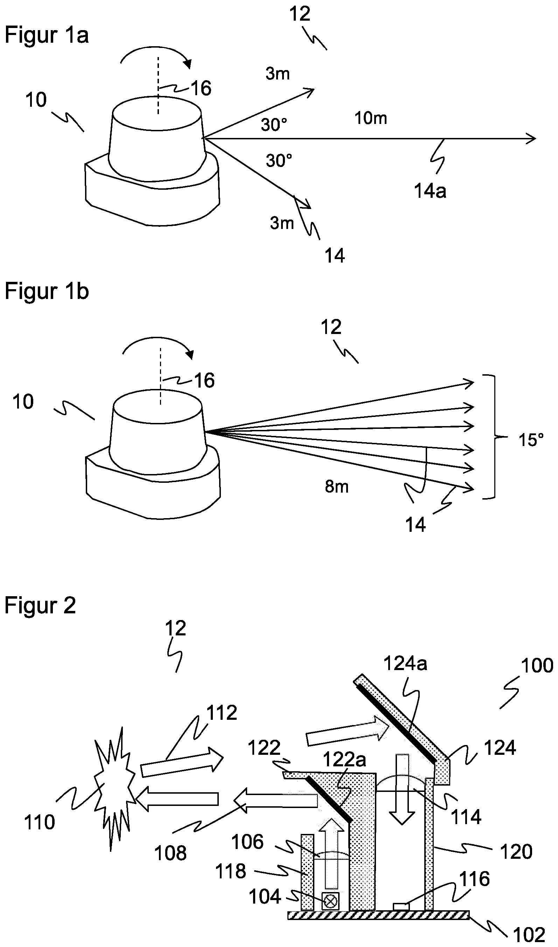

Die Figuren 1a-b zeigen zwei beispielhafte Anforderungen für einen Laserscanner 10, der einen Überwachungsbereich 12 in mehreren Abtastebenen 14 erfasst, die hier als Pfeile symbolisiert sind.

Figur 1a stellt einen Drei-Lagen-Scanner dar, bei dem neben einer zentralen Hauptebene 14a senkrecht zur Drehachse 16 des Laserscanners 10 zwei seitliche Abtastebenen 14 mit großem Blickwinkel von ± 30° erfasst werden. Die Winkelangaben beziehen sich jeweils auf den Elevationswinkel, der gegen die zentrale Hauptebene 14a gemessen ist. Mit der zentralen Hauptebene 14a wird beispielsweise der Fahrweg eines autonomen Fahrzeugs überwacht, wofür eine möglichst große Reichweite von hier 10 m gefordert ist, während die seitlichen Abtastebenen 14 ergänzende Informationen über den Boden und den Bereich oberhalb des Fahrzeugs liefern. Hierfür kann eine geringere Reichweite von hier 3 m ausreichend sein.

Figur 1b ist ein Beispiel eines Mehrlagenscanners 10 mit nun sechs Abtastebenen 14 in gleichmäßigem Winkelabstand von jeweils 3°, die insgesamt einen Winkelsektor von 15° abdecken. Diese gleichmäßige Abtastung des Winkelsektors wird mit einer jeweils gleichen Reichweite von rein beispielhaft 8 m durchgeführt.

Die Reichweite in den einzelnen Abtastebenen 14 ist kostentreibend. Bei einer bestimmten Fremdlichtlast wird die Reichweite durch Eigenschaften von Sender, Empfänger sowie von Optikparametern wie Brennweite und Apertur bestimmt. Eine höhere Reichweite bedarf daher leistungsstärkerer Sender, empfindlicherer Empfänger, besserer Optiken und/oder aufwändigerer Auswertungsverfahren. Innerhalb von Gebäuden genügt regelmäßig eine Reichweite von höchstens 10 m, und aufgrund der Überdachung kann auch die Fremdlichtrobustheit im Vergleich zum Außenbereich verringert werden, was sich unmittelbar in einer möglichen Kostenreduktion äußert. Für manche Abtastebenen, wie die seitlichen Abtastebenen 14 in Figur 1a, genügt sogar eine noch geringere Reichweite.

Konfigurationen von Abtastebenen 14 eines Laserscanners 10 im Rahmen dieser Beschreibung sind durch die Anzahl der Abtastebenen 14, deren Elevationswinkel und damit gegenseitiger Winkelabstand sowie die Reichweite bestimmt. Ein gerade für autonome Fahrzeuge sinnvoller Rahmen wird durch Laserscannertypen mit ein bis zehn Abtastebenen abgesteckt, in beliebigen Elevationswinkeln von bis zu ± 30° positioniert werden. Bei der Wahl nur einer Abtastebene gäbe es einfachere, herkömmliche Lösungen, aber nichtsdestotrotz gibt es auch diese Möglichkeit. Die Reichweite lässt sich durch entsprechende Hardware oder Parametrierung beispielsweise zwischen 1 m und 10 m wählen, bei Bedarf sind größere Reichweiten denkbar. Durch möglichst gute Anpassung der Abtastebenen 14 an die tatsächlichen Anforderungen der Anwendung werden die zu verarbeitenden Datenmengen erheblich reduziert, weil nur die notwendigen Messdaten anfallen. Dadurch genügt eine geringere Rechnerleistung bei geringeren Kosten, oder die freigewordenen Ressourcen werden für eine höhere Scanrate genutzt.

Die durch einen jeweiligen Abtaststrahl erfasste Fläche wird vereinfachend als Abtastebene 14 bezeichnet. Genaugenommen trifft das nur für die zentrale Abtastebene 14a mit Elevationswinkel 0° zu. Bei anderen Elevationswinkeln handelt es sich um die Mantelfläche eines Kegels, der je nach Elevationswinkel unterschiedlich spitz ausgebildet ist. Mehrere solche Mantelflächen führen zu einem Abtastgebilde aus einer Art Schachtelung von mehreren Sanduhren. In dieser Beschreibung wird jedoch vereinfachend nicht zwischen einer Abtastebene 14a und einer Mantelfläche 14 unterschieden.

Figur 2 zeigt eine Schnittansicht eines Abtastmoduls 100 für einen Laserscanner 10. Auf einer Modulleiterplatte 102 ist ein Lichtsender 104 angeordnet, beispielsweise mit einer LED oder einem Laser in Form eines Kantenemitters oder VCSELs (Vertical Cavity Surface Emitting Laserdiode), der mit Hilfe einer Sendeoptik 106 einen Sendelichtstrahl 108 erzeugt, der in den Überwachungsbereich 12 ausgesandt wird.

Treffen die Sendelichtstrahlen 108 in dem Überwachungsbereich 12 auf ein Objekt 110, so kehren entsprechende remittierte Lichtstrahlen 112 zu dem Abtastmodul 100 zurück. Die Tatsache, dass Sendelichtstrahlen 108 und remittierte Lichtstrahlen 112 nicht in direkter Gegenrichtung, sondern etwas schräg verlaufen, ist dem Maßstab mit dem extrem nahen Objekt 110 geschuldet. Bei üblichen Messabständen gibt es diese Schrägstellung praktisch nicht. Die remittierten Lichtstrahlen 112 werden von einer Empfangsoptik 114 auf einen Lichtempfänger 116 geführt. Der Lichtempfänger 116 ist beispielsweise eine Photodiode oder eine APD (Avalanche Photodiode), vorzugsweise ein SPAD-Empfänger (Single-Photon Avalanche Diode), auch als SiPM (Silicon Photomultiplier) bezeichnet. Das von dem Lichtempfänger 116 erzeugte Empfangssignal wird ausgewertet. Diese Auswertung findet vorzugsweise außerhalb des Abtastmoduls 110 statt, aber zumindest eine eigene Aufbereitung des Empfangssignals, gegebenenfalls sogar eine vollständige Auswertung etwa zur Bestimmung des Abstands zu dem Objekt 110 mit einem Lichtlaufzeitverfahren ist alternativ auch innerhalb des Abtastmoduls 100 möglich.

Zur Vermeidung von optischem Übersprechen und zur Unterdrückung von Fremdlicht sind der Sendepfad an dem Lichtsender 104 durch einen Sendetubus 118 und der Empfangspfad an dem Lichtempfänger 116 durch einen Empfangstubus 120 abgeschirmt. An den Sendetubus 118 schließt sich oben ein Sendespiegelkranz 122 mit einem Sendespiegel 122a und entsprechend an den Empfangstubus 120 ein Empfangsspiegelkranz 124 mit einem Empfangsspiegel 124a an. Der Begriff Spiegelkranz erschließt sich erst später bei einer ringförmigen Mehrfachanordnung von Abtastmodulen 100. Für das einzelne Abtastmodul 100 handelt es sich einfach um einen Träger, der alternativ auch separat für ein Abtastmodul 100 vorgesehen und nicht ring- oder kranzförmig sein kann.

Der Sendelichtstrahl 108 verlässt das Abtastmodul 100 nicht auf direktem Weg, sondern wird zuvor an dem Sendespiegel 122a umgelenkt. Entsprechend gelangt der remittierte Lichtstrahl 112 nicht auf direktem Weg zu dem Lichtempfänger 116, sondern wird zuvor an dem Empfangsspiegel 124a umgelenkt. Der Winkel, in dem Sendespiegel 122a und Empfangsspiegel 124a stehen, bestimmt daher den Winkel, in dem der Sendelichtstrahl 106 das Abtastmodul 100 verlässt beziehungsweise unter dem der remittierte Lichtstrahl 112 wieder empfangen wird. Die Neigung oder Verkippung von Sendespiegel 122a und Empfangsspiegel 124a legt somit den Elevationswinkel des Abtastmoduls 100 fest.

Alternativ zu der in Figur 2 gezeigten biaxialen Anordnung mit nebeneinanderliegendem Sende- und Empfangspfad ist auch eine koaxiale Anordnung in dem Abtastmodul 100 vorstellbar. Anstelle separater Sende- und Empfangsspiegelkränze 122, 124 genügt dann ein gemeinsamer Spiegelkranz mit einem gemeinsamen Umlenkspiegel.

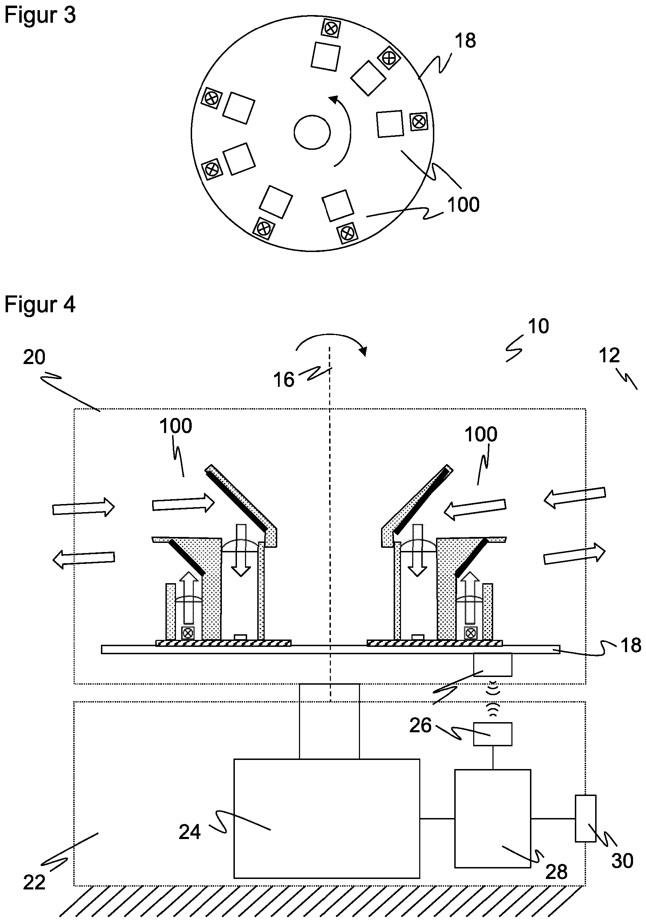

Figur 3 zeigt eine Draufsicht auf eine rotierende Grundplatte, vorzugsweise eine rotierende Leiterplatte 18 eines Laserscanners 10. In dieser Bestückungsvariante sind sieben Abtastmodule 100 mit gegenseitigem Winkelversatz in Drehrichtung der rotierenden Leiterplatte 18 vorgesehen, die jeweils nur stellvertretend durch ihren Lichtsender und Lichtempfänger dargestellt sind.

Die Abtastmodule 100 sind vorzugsweise Gleichteile, also untereinander identisch aufgebaut. Sie unterscheiden sich nur in der Neigung von Sendespiegel 122a und Empfangsspiegel 124a und damit im Elevationswinkel der jeweiligen Abtastebene 14. Alternativ ist auch denkbar, unterschiedliche Abtastmodule 100 beispielsweise mit verschiedenen Reichweiten zu verwenden. Unterschiede können unter anderem hinsichtlich Lichtsender 104, Lichtempfänger 116 und Eigenschaften von Sendeoptik 106 oder Empfangsoptik 14 in optischen Eigenschaften wie Apertur oder Brennweite bestehen.

Die ungleichmäßige Verteilung der Abtastmodule 100 über den Umfang soll verdeutlichen, wie sehr einfach Varianten mit unterschiedlichen Anzahlen von Abtastebenen 14 geschaffen werden können. Dazu wird einfach eine Maximalanzahl von beispielsweise bis zu zehn Bestückungsplätzen für Abtastmodule 100 angeboten, die je nach Variante nicht alle genutzt werden.

Das Abtastmodul 100 ist in Figur 2 mit einer eigenen Modulleiterplatte 102 dargestellt und kann so als ganzes Sende-Empfangsmodul mit oder ohne eigene Auswertungselektronik auf der rotierenden Leiterplatte 18 angeordnet werden, etwa mittels eines Ballgrid-Arrays (SMD-)gelötet werden. Alternativ können einzelne Elemente des Abtastmoduls 100 einzeln ohne Modulleiterplatte 102 oder mit mehreren Modulleiterplatten 102 jeweils für nur einen Teil der Elemente auf der rotierenden Leiterplatte 18 angeordnet werden.

Figur 4 zeigt eine schematische Schnittdarstellung durch einen optoelektronischen Sensor 10 in einem Beispiel als modularer Vielstrahl-Laserscanner. Der Sensor 10 umfasst in grober Aufteilung eine bewegliche Abtasteinheit 20 und eine Sockeleinheit 22. Die Abtasteinheit 20 ist der optische Messkopf, während in der Sockeleinheit 22 weitere Elemente wie eine Versorgung, Auswertungselektronik, Anschlüsse und dergleichen untergebracht sind. Im Betrieb wird mit Hilfe eines Antriebs 24 der Sockeleinheit 22 die Abtasteinheit 20 in eine Drehbewegung oder alternativ in eine schwenkende Hin- und Herbewegung um die Drehachse 16 versetzt, um so den Überwachungsbereich 12 periodisch abzutasten. Abweichend von der Darstellung ist kein separater Antrieb 24 erforderlich. Vielmehr können Magnet- und Spulenstrukturen in der rotierenden Leiterplatte 18 sowie einer nicht dargestellten, parallel dazu angeordneten weiteren Leiterplatte der Sockeleinheit 22 vorgesehen sein. Dadurch entsteht ein besonders kompakter Aufbau.

In der Abtasteinheit 20 sind mehrere Abtastmodule 100 vorgesehen. In Figur 4 sind, auch wegen der Schnittansicht, nur zwei Abtastmodule 100 dargestellt, allgemein sind es wie erwähnt bis zu zehn und im Einzelfall auch mehr. Die einzelnen Elemente der Abtastmodule 100 sind in Figur 4 der Übersicht halber nicht mehr mit Bezugszeichen versehen. Der Aufbau eines einzelnen Abtastmoduls 100 wurde bereits oben unter Bezugnahme auf Figur 2 erläutert. Die Abtastmodule 100 unterscheiden sich in ihrem Elevationswinkel und damit den jeweils erfassten Abtastebenen 14. In Figur 4 erfassen die beiden dargestellten Abtastmodule 100 eine leicht nach oben und eine in einem etwas kleineren Winkel nach unten verkippte Abtastebene 14. In anderen Beispielen können durch weitere Abtastmodule 100 insbesondere wie zu Figur 3 erläutert und durch andere Neigungen der Sendespiegel 122a und Empfangsspiegel 124a andere Konfigurationen von Abtastebenen 14 entstehen, wie bereits oben unter Bezugnahme auf Figur 1a-b vorgestellt.

Eine berührungslose Versorgungs- und Datenschnittstelle 26 verbindet die bewegliche Abtasteinheit 20 mit der ruhenden Sockeleinheit 22. Die Versorgungs- und Datenschnittstelle 26 kann wie der Motor in die rotierende Leiterplatte 18 und ein nicht rotierendes Gegenstück in der Sockeleinheit 22 integriert werden.

In der Sockeleinheit 22 befindet sich eine Steuer- und Auswertungseinheit 28. Alternativ kann die Steuer- und Auswertungseinheit 28 auch auf Bausteinen der Abtasteinheit 20 oder der Abtastmodule 100 implementiert sein, oder die Funktionalität wird auf mehrere Bausteine an verschiedenen Orten verteilt. Die Steuer- und Auswertungseinheit 28 steuert die Lichtsender 104 und erhält das jeweilige Empfangssignal der Lichtempfänger 116 zur weiteren Auswertung. Außerdem steuert sie den Antrieb 24 und erhält das Signal einer nicht gezeigten, von Laserscannern allgemein bekannten Winkelmesseinheit, welche die jeweilige Winkelstellung der Abtasteinheit 20 bestimmt.

Zur Auswertung wird vorzugsweise mit einem an sich bekannten Lichtlaufzeitverfahren die Distanz zu einem angetasteten Objekt 110 gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene 14 zur Verfügung. Über die Vielzahl von Abtastebenen 14 der mehreren Abtastmodule 100 mit unterschiedlichem Elevationswinkel wird insgesamt ein dreidimensionaler Raumbereich abgetastet.

Damit sind die Objektpositionen beziehungsweise Objektkonturen bekannt und können über eine Sensorschnittstelle 30 ausgegeben werden. Die Sensorschnittstelle 30 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 30 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

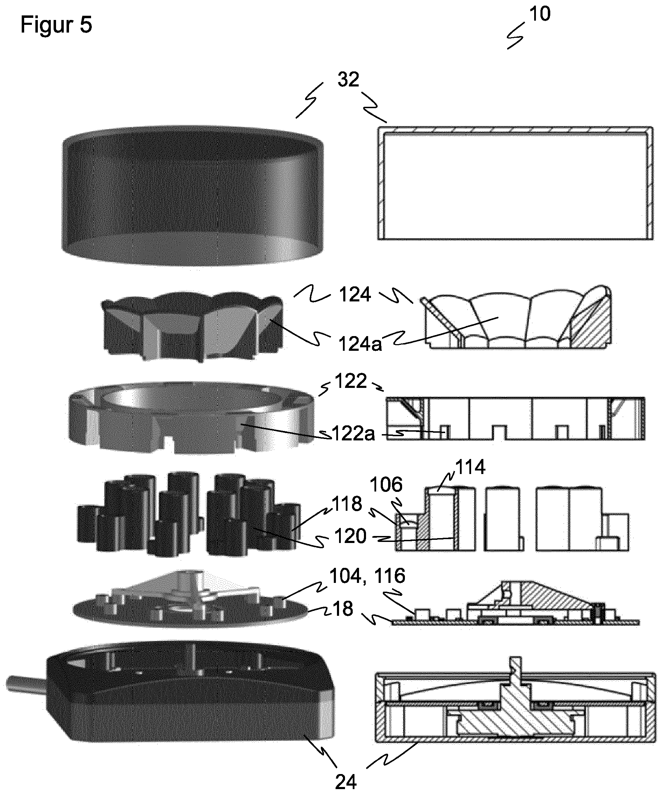

Figur 5 zeigt schematisch Unterbaugruppen eines Beispiels eines Sensors 10 gemäß Figur 4 in einer Explosionsdarstellung, und zwar links als eine dreidimensionale Ansicht und rechts als eine Schnittdarstellung.

Eine Abdeckhaube oder Frontscheibe 32 ist unabhängig von der konkreten Konfiguration von Abtastebenen 14 und schützt das Innere des Sensors 10. Je nach Materialwahl kann die Frontscheibe 32 noch eine optische Filterwirkung zur Fremdlichtreduktion erfüllen.

Der Empfangsspiegelkranz 124 definiert mittels der geneigten oder verkippten Empfangsspiegel 124a die Elevationswinkel oder die Erfassungsrichtung der einzelnen Abtastmodule 100. In dieser Darstellung wird auch der Begriff Spiegelkranz verständlich. Ein solcher gemeinsamer Träger für alle Empfangsspiegel 124a ist besonders vorteilhaft, aber es wäre auch möglich, Träger für die Empfangsspiegel 124a jeweils pro Abtastmodul 100 oder Gruppe von Abtastmodulen 100 vorzusehen.

Die Sendespiegel 122a des Sendespiegelkranzes 122 sind entsprechend dem dazugehörigen Empfangspfad ausgerichtet. Jedes Abtastmodul 100 erfasst so eine Abtastebene 14 mit einem bestimmten Elevationswinkel. Erneut könnte anstelle des Sendespiegelkranzes 122 eine Vielzahl einzelner Träger verwendet werden.

Zu jedem Abtastmodul 100 gehört eine Optikanordnung aus Sendeoptik 106 mit Sendetubus 118 und Empfangsoptik 114 mit Empfangstubus 120, um die optischen Elemente in definiertem Abstand zu Lichtsender 104 und Lichtempfänger 116 zu halten und Sende- und Empfangspfad voneinander abzuschirmen. Diese Optikanordnungen sind vorzugsweise als standardisierte Vorbaugruppe realisiert.

Auf der rotierenden Leiterplatte 18 sind Lichtsender 104 und Lichtempfänger 116 direkt oder mittels Modulleiterplatte 102 befestigt und elektrisch kontaktiert. Die Anordnung oder Bestückung erfolgt in definierten Positionen und Abständen, die zu der Optikanordnung darüber passt und deren Befestigung auf der rotierenden Leiterplatte 18 zulässt. So wird gemeinsam mit der Optikanordnung ein funktionsfähiger Lichtsensor, insbesondere ein Abstandssensor nach einem Lichtlaufzeitverfahren gebildet.

Die als ein Grundgehäuse fungierende Sockeleinheit 24 beinhaltet die Steuer- und Auswerteeinheit 28, den Antrieb 24, sofern dieser nicht in die rotierende Leiterplatte 18 integriert ist, sowie eine Lagerung und Halterungen, die eine mechanisch robuste Positionierung der Unterbaugruppen zueinander gewährleisten.

Die Scanlagen-Parameter, mit denen die Abtastebenen 14 festlegt werden, nämlich Blickwinkel und Winkelabstand, werden durch den Elevationswinkel und damit letztlich durch Sendespiegelkranz 122 und Empfangsspiegelkranz 124 bestimmt. Eine Anpassung der Abtastebenenkonfiguration an eine bestimmte Anwendung erfolgt allein durch Änderung der Neigungswinkel der Sendespiegel 122a und der Empfangsspiegel 124a. Alle anderen Unterbaugruppen können dabei unangetastet bleiben.

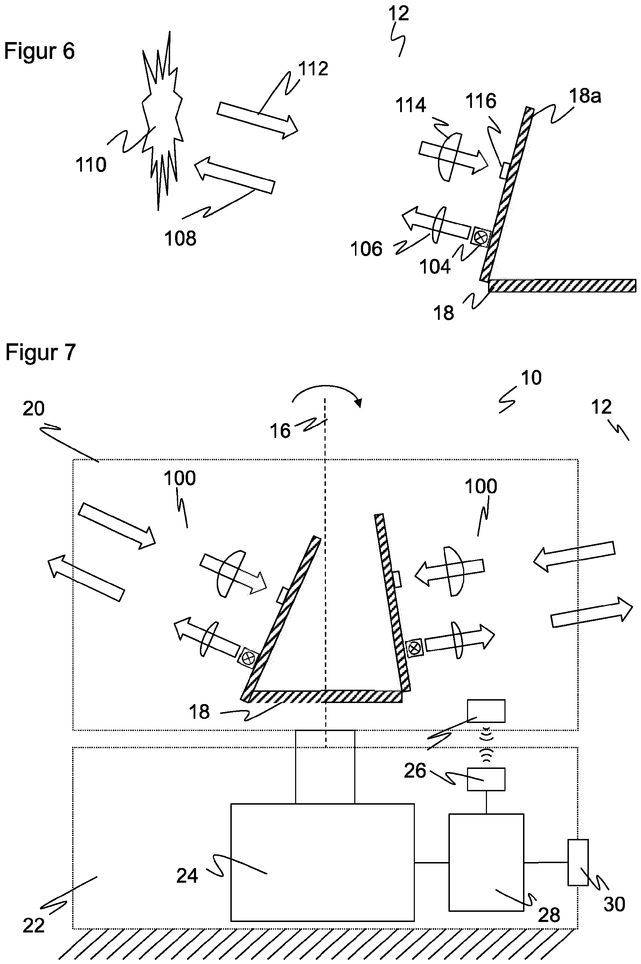

Figur 6 zeigt eine Schnittdarstellung einer Ausführungsform eines Abtastmoduls 100. Im Unterschied zu dem Abtastmodul gemäß Figur 2 sind hier keine Spiegelkränze 122, 124 und Spiegel 122a, 124a vorgesehen. Weiterhin vorhandene Elemente sind mit gleichen Bezugszeichen bezeichnet und werden nicht nochmals erläutert. Eine Abschirmung und Kanaltrennung durch einen Sendetubus 118 beziehungsweise Empfangstubus 120 wäre auch hier ergänzend denkbar.

Statt einer Umlenkung durch Spiegel 122a, 124a wird in der Ausführungsform nach Figur 6 der Elevationswinkel dadurch eingestellt, dass Lichtsender 104 und Lichtempfänger 116 auf beweglichen oder biegsamen Abschnitten 18a der rotierenden Leiterplatte 18 untergebracht sind, die auch als Leiterplattenlaschen bezeichnet werden können. Diese beweglichen Abschnitte 18a werden so geneigt und anschließend fixiert, dass Sendelichtstrahl 108 und remittierter Lichtstrahl 112 in einem gewünschten Elevationswinkel ausgesandt und empfangen werden. Auch damit lassen sich die Konfigurationen von Abtastebenen 14 mit unterschiedlichen Elevationswinkeln umsetzen. Im Übrigen ist auch denkbar, geneigte biegsame Abschnitte 18a gemäß Figur 6 mit Sendespiegeln 122a und Empfangsspiegeln 124a zu kombinieren. Eine koaxiale Variante ist ebenfalls vorstellbar.

Figur 7 zeigt eine Schnittdarstellung eines Sensors 10 mit den Abtastmodulen 100 gemäß Figur 6. Der Sensor 10 wurde bereits zu Figur 4, die Abtastmodule 100 zu Figur 6 erläutert.

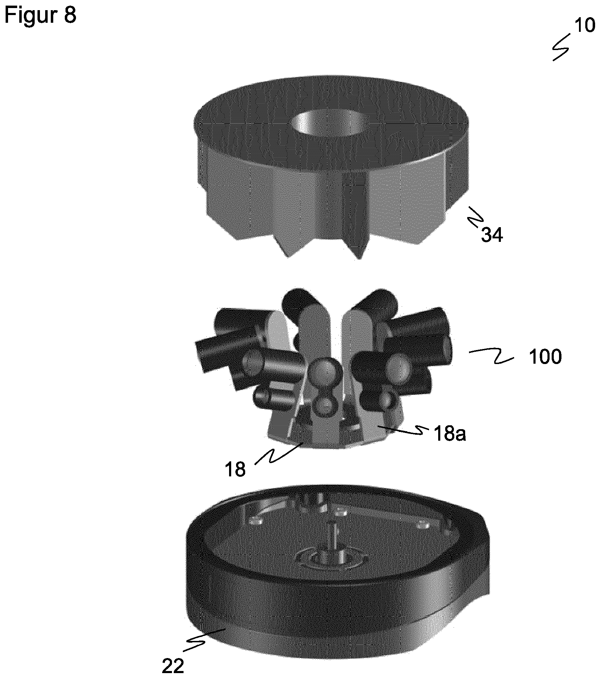

Figur 8 zeigt die Unterbaugruppen des Laserscanners gemäß Figur 7 in einer schematischen dreidimensionalen Explosionsdarstellung. In der Mitte ist gut erkennbar, wie die geneigten Abschnitte 18a als Leiterplattenlaschen in unterschiedlichem Ausmaß nach Innen geknickt oder gefaltet werden, um den gewünschten Elevationswinkel zu erzielen. Als optionales zusätzliches Element ist ein Teilerkranz 34 vorgesehen, welcher die Abtastmodule 100 voneinander abschirmt. Diese Funktion übernehmen in dem Beispiel gemäß Figur 4 bereits die Spiegelkränze 122, 124. Der Teilerkranz 34 kann passend geneigte Flächen aufweisen, an denen die beweglichen Abschnitte 18a befestigt werden, um so den gewünschten Elevationswinkel festzulegen.

## Patentansprüche

1. Optoelektronischer Sensor (10), insbesondere Laserscanner, zur Erfassung von Objekten (110) in einem Überwachungsbereich (12), wobei der Sensor (10) eine um eine Drehachse (16) bewegliche Abtasteinheit (20) mit mehreren darin untergebrachten Abtastmodulen (100) zur periodischen Abtastung des Überwachungsbereichs (12) und zum Erzeugen von entsprechenden Empfangssignalen sowie eine Steuer- und Auswertungseinheit (28) zur Gewinnung von Informationen über die Objekte (110) aus den Empfangssignalen aufweist, wobei die Abtastmodule (100) jeweils einen Lichtsender (104) zum Aussenden eines Lichtstrahls (108) und einen Lichtempfänger (116) zum Erzeugen eines jeweiligen Empfangssignals aus dem von den Objekten (110) remittierten Lichtstrahl (112) umfassen und wobei zur Einstellung eines Elevationswinkels einer jeweils von einem Abtastmodul (100) erfassten Abtastebene (14) bezüglich einer zentralen Abtastebene (14a) senkrecht zur Drehachse (16) die Abtastmodule (100) auf in ihrer Neigung veränderlichen Abschnitten (18a) einer Leiterplatte (18) angeordnet sind,
**dadurch gekennzeichnet,**
**dass** die Leiterplatte (18) als rotierende Leiterplatte und als Grundplatte der Abtasteinheit (20) in einer Ebene senkrecht zu der Drehachse (16) ausgebildet ist, die bewegliche oder verbiegbare Abschnitte (18a) aufweist, um die Abschnitte (18a) aus der Ebene der Grundplatte heraus zu neigen oder zu verkippen.

2. Sensor (10) nach Anspruch 1,
wobei die Abtastmodule (100) untereinander identisch aufgebaut sind.

3. Sensor (10) nach Anspruch 1 oder 2,
wobei die Abtastmodule (100) in Umfangrichtung um die Drehachse (16) versetzt zueinander angeordnet sind.

4. Sensor (10) nach einem der vorhergehenden Ansprüche,
wobei die Abtastmodule (100) auf der rotierenden Leiterplatte (18) ringförmig bestückt sind.

5. Sensor (10) nach einem der vorhergehenden Ansprüche,
wobei oberhalb der Leiterplatte (18) ein ringförmiger Teilerkranz (34) mit Winkelsegmentteilern angeordnet ist, welche die Lichtstrahlen (108, 112) der Abtastmodule (100) voneinander trennen, wobei insbesondere der Teilerkranz (34) so geformt ist, dass dadurch die veränderlichen Abschnitte (18a) mit einer durch die Formgebung festgelegten Neigung fixiert sind.

6. Sensor (10) nach einem der vorhergehenden Ansprüche,
der zwei bis zehn Abtastmodule (100) aufweist und/oder wobei für die Abtastmodule (100) Elevationswinkel zwischen -30° und +30° einstellbar sind.

7. Sensor (10) nach einem der vorhergehenden Ansprüche,
wobei die Abtastmodule (100) jeweils genau einen Lichtsender (104) und Lichtempfänger (116) aufweisen.

8. Sensor (10) nach einem der vorhergehenden Ansprüche,
wobei die Steuer- und Auswertungseinheit (28) dafür ausgebildet ist, aus einer Lichtlaufzeit zwischen Aussenden der Lichtstrahlen (108) und Empfangen der remittierten Lichtstrahlen (112) einen Abstand des Objekts (110) zu bestimmen.

9. Verfahren zur Erfassung von Objekten (110) in einem Überwachungsbereich (12), der mit Hilfe einer um eine Drehachse (16) beweglichen Abtasteinheit (20) mit mehreren darin untergebrachten Abtastmodulen (100) periodisch abgetastet wird, wobei die Abtastmodule (100) jeweils einen Lichtstrahl (108) aussenden, nach Remission an den Objekten (110) als remittierten Lichtstrahl (112) wieder empfangen und ein jeweiliges Empfangssignal erzeugen, und wobei die Empfangssignale zur Gewinnung von Informationen über die Objekte (110) ausgewertet werden, wobei ein Elevationswinkel einer jeweils von einem Abtastmodul (100) erfassten Abtastebene (14) bezüglich einer zentralen Abtastebene (14a) senkrecht zur Drehachse (16) eingestellt wird, indem ein jeweiliger in seiner Neigung veränderlicher Abschnitt (18a) einer Leiterplatte (18), auf dem jeweils ein Abtastmodul (100) angeordnet ist, entsprechend dem Elevationswinkel geneigt wird,
**dadurch gekennzeichnet,**
**dass** die Leiterplatte (18) als rotierende Leiterplatte und als Grundplatte der Abtasteinheit (20) in einer Ebene senkrecht zu der Drehachse (16) ausgebildet ist, deren bewegliche oder verbiegbare Abschnitte (18a) aus der Ebene der Grundplatte heraus geneigt oder verkippt sind.

## Claims

1. An optoelectronic sensor (10), in particular a laser scanner, for detecting objects (110) in a monitored area (12), wherein the sensor (10) comprises a scanning unit (20) movable about an axis of rotation (16) and having a plurality of scanning modules (100) accommodated therein for periodically scanning the monitored area (12) and for generating corresponding received signals, and a control and evaluation unit (28) for generating information about the objects (110) from the received signals, wherein the scanning modules (100) each comprise a light transmitter (104) for transmitting a light beam (108) and a light receiver (116) for generating a respective received signal from the light beam (112) reflected by the objects (110), and wherein for adjusting an angle of elevation of a scanning plane (14) detected by a respective scanning module (100) with respect to a central scanning plane (14a) perpendicular to the axis of rotation (16) the scanning modules (100) are arranged on sections (18a) of a circuit board (18) which are variable in their inclination,
**characterized in that** the circuit board (18) is configured as a rotating circuit board and as a base plate of the scanning unit (20) in a plane perpendicular to the axis of rotation (16) that has movable or bendable sections (18a) in order to incline or tilt the sections (18a) out of the plane of the base plate.

2. The sensor (10) according to claim 1,
wherein the scanning modules (100) have a same configuration.

3. The sensor (10) according to claim 1 or 2,
wherein the scanning modules (100) are arranged offset to one another in the circumferential direction about the axis of rotation (16).

4. The sensor (10) according to any of the preceding claims,
wherein the scanning modules (100) are arranged in a ring shape on the rotating circuit board (18).

5. The sensor (10) according to any of the preceding claims,
wherein an annular divider ring (34) with angle segment dividers is arranged above the circuit board (18), which separate the light beams (108, 112) of the scanning modules (100) from one another, wherein in particular the divider ring (34) is shaped in such a way that the variable sections (18a) are fixed with an inclination determined by the shaping.

6. The sensor (10) according to any of the preceding claims,
which has two to ten scanning modules (100) and/or wherein elevation angles between -30° and +30° can be set for the scanning modules (100).

7. The sensor (10) according to any of the preceding claims,
wherein the scanning modules (100) each comprise exactly one light transmitter (104) and light receiver (116).

8. The sensor (10) according to any of the preceding claims,
wherein the control and evaluation unit (28) is configured to determine a distance of the object (110) from a light time of flight between the transmission of the light beams (108) and the reception of the reflected light beams (112).

9. A method for detecting objects (110) in a monitoring area (12) which is periodically scanned using a scanning unit (20) movable about an axis of rotation (16) and having a plurality of scanning modules (100) accommodated therein, wherein the scanning modules (100) each transmit a light beam (108), receive it again as a remitted light beam (112) after remission at the objects (110), and generate a respective received signal, and wherein the received signals are evaluated to obtain information about the objects (110), wherein an angle of elevation of a scanning plane (14) detected by a respective scanning module (100) is set with respect to a central scanning plane (14a) perpendicular to the axis of rotation (16) by means of inclining, according to the angle of elevation, a respective section (18a) of a circuit board (18) having variable inclination, a respective scanning module (100) being arranged on a section,
**characterized in that** the circuit board (18) is configured as a rotating circuit board and as a base plate of the scanning unit (20) in a plane perpendicular to the axis of rotation (16) whose movable or bendable sections (18a) are inclined or tilted out of the plane of the base plate.

## Revendications

1. Capteur optoélectronique (10), en particulier scanner laser, pour détecter des objets (110) dans une zone à surveiller (12), dans lequel le capteur (10) comporte une unité de balayage (20) mobile autour d'un axe de rotation (16) et pourvue de plusieurs modules de balayage (100) qui y sont logés pour balayer périodiquement la zone à surveiller (12) et pour générer des signaux de réception correspondants, ainsi qu'une unité de commande et d'évaluation (28) pour obtenir des informations sur les objets (110) à partir des signaux de réception, les modules de balayage (100) comprennent chacun un émetteur de lumière (104) pour émettre un faisceau lumineux (108) et un récepteur de lumière (116) pour générer un signal de réception respectif à partir du faisceau lumineux (112) réémis par les objets (110), et en vue de régler un angle d'élévation d'un plan de balayage (14), détecté par un module de balayage (100), par rapport à un plan de balayage central (14a) perpendiculaire à l'axe de rotation (16), les modules de balayage (100) sont disposés sur des portions (18a) d'une carte à circuit imprimé (18) qui sont variables quant à leur inclinaison,
**caractérisé en ce que**
la carte à circuit imprimé (18) est réalisée sous forme de carte à circuit imprimé en rotation et sous forme de plaque de base de l'unité de balayage (20) dans un plan perpendiculaire à l'axe de rotation (16), qui comprend des portions mobiles ou flexibles (18a) pour faire incliner ou basculer les portions (18a) hors du plan de la plaque de base.

2. Capteur (10) selon la revendication 1, dans lequel les modules de balayage (100) sont conçus de manière identique les uns aux autres.

3. Capteur (10) selon la revendication 1 ou 2, dans lequel les modules de balayage (100) sont disposés de manière décalée les uns par rapport aux autres dans la direction circonférentielle autour de l'axe de rotation (16).

4. Capteur (10) selon l'une des revendications précédentes, dans lequel les modules de balayage (100) sont agencés en forme annulaire sur la carte à circuit imprimé en rotation (18).

5. Capteur (10) selon l'une des revendications précédentes, dans lequel une couronne de division (34) annulaire comprenant des diviseurs de segments angulaires est disposée au-dessus de la carte à circuit imprimé (18), lesquels séparent les faisceaux lumineux (108, 112) des modules de balayage (100) les uns des autres, en particulier la couronne de division (34) étant formée de telle sorte que les portions variables (18a) sont ainsi fixées avec une inclinaison définie par la forme.

6. Capteur (10) selon l'une des revendications précédentes, qui comprend deux à dix modules de balayage (100), et/ou dans lequel des angles d'élévation compris entre -30° et +30° peuvent être réglés pour les modules de balayage (100).

7. Capteur (10) selon l'une des revendications précédentes, dans lequel les modules de balayage (100) comprennent chacun précisément un émetteur de lumière (104) et un récepteur de lumière (116).

8. Capteur (10) selon l'une des revendications précédentes, dans lequel l'unité de commande et d'évaluation (28) est réalisée pour déterminer une distance de l'objet (110) à partir d'un temps de parcours de lumière entre l'émission des faisceaux lumineux (108) et la réception des faisceaux lumineux réémis (112).

9. Procédé pour détecter des objets (110) dans une zone à surveiller (12) qui est balayée périodiquement à l'aide d'une unité de balayage (20) mobile autour d'un axe de rotation (16) et pourvue de plusieurs modules de balayage (100) qui y sont logés, dans lequel les modules de balayage (100) émettent chacun un faisceau lumineux (108), le reçoivent en tant que faisceau lumineux réémis (112) après réémission sur les objets (110) et génèrent un signal de réception respectif, et les signaux de réception sont évalués pour obtenir des informations sur les objets (110), un angle d'élévation d'un plan de balayage (14) respectif, détecté par un module de balayage (100), par rapport à un plan de balayage central (14a) perpendiculaire à l'axe de rotation (16) est réglé en faisant incliner selon l'angle d'élévation une portion respective (18a) d'une carte à circuit imprimé (18), portion qui est variable quant à son inclinaison et sur laquelle est disposé un module de balayage respectif (100),
**caractérisé en ce que**
la carte à circuit imprimé (18) est réalisée sous forme de carte à circuit imprimé en rotation et sous forme de plaque de base de l'unité de balayage (20) dans un plan perpendiculaire à l'axe de rotation (16), dont les portions mobiles ou flexibles (18a) sont inclinées ou basculées hors du plan de la plaque de base.
